# EUROPÄISCHE PATENTSCHRIFT

(11) **EP 0 469 693 B1**
(45) Veröffentlichungstag und Bekanntmachung des Hinweises auf die Patenterteilung: **05.06.1996**
(21) Anmeldenummer: 91250206.9
(22) Anmeldetag: 25.07.1991
(51) Int. Cl.: C08L 77/06, C08L 77/02, C08L 51/06

(54) **Schlagzähe Polyamid-Formmassen**
Impact resistent molding materials of polyamide
Matières à mouler de polyamide avec résistance au choc

(30) Priorität: 02.08.1990 DD 343208; 19.07.1991 DE 4123963
(43) Veröffentlichungstag der Anmeldung: 05.02.1992
(73) Patentinhaber: Buna Sow Leuna Olefinverbund GmbH, D-06258 Schkopau (DE)
(72) Erfinder: Gerecke, Jochen, Dr., O-4090 Halle (DE); Gruber, Klaus, O-4020 Halle (DE); Schütz, Ullrich, Dr., O-4014 Halle (DE); Wulff, Dirk, Dr., O-4090 Halle (DE); Thiele, Klaus, Dr., O-4020 Halle (DE); Hofmann, Tatjana, O-4090 Halle (DE); Häussler, Lutz, Dr., O-4090 Halle (DE); Brose, Petra, O-4070 Halle (DE)

(56) Entgegenhaltungen:
- EP-A- 403 109
- EP-A- 0 050 471
- EP-A- 0 180 302
- WO-A-88/06174
- WO-A-91/07467
- WO-A-91/18053
- US-A- 4 174 358

## Beschreibung

Die Erfindung betrifft schlagzähe Polyamid-Formmassen aus 30 bis 97 Massenteilen eines teilkristallinen Polyamids, vorzugsweise Polycapronamid (PA 6) oder Poly(hexamethylenadipamid) (PA 6.6) bzw. ihren Mischpolykondensaten PA 6/6.6 oder PA 6/PA 6.6-Gemischen, und 3 bis 70 Massenteilen eines Polyolefins oder Polyolefingemisches, welches einen mittels Pfropfung von α, β-ethylenisch ungesättigten Mono- und/oder Dicarbonsäuren bzw. deren Anhydriden funktionalisierten Polyolefinmassenanteil von 10 bis 100 % enthält, für den Einsatz als Konstruktionswerkstoff für die Herstellung von technischen Artikeln und Konsumgütern mit verbessertem Zähigkeits-Festigkeits-Steifigkeits-Niveau.

Für die meisten Einsatzfälle von Formmassen auf Basis von teilkristallinen Polyamiden, insbesondere PA 6 und PA 6.6, als Hauptkomponente wird eine hohe Gebrauchszähigkeit im trockenen bzw. "spritzfrischen" (unkonditionierten) Zustand bei gleichzeitiger Sicherung eines hohen Festigkeits-Steifigkeits-Niveaus über einen breiteren Temperaturbereich gefordert. Generell kann diese Forderung durch Einarbeiten einer geeigneten verträglichen Schlagzähkomponente erreicht werden. Bekannt ist die Verwendung von Ethylen-Vinylacetat-Copolymeren (EVA) mit Massenanteilen an einpolymerisierten Vinylacetateinheiten in die Ethylenkette zwischen 5 und etwa 60 % sowie Glasübergangstemperaturen unterhalb 0 °C und mit unterschiedlichem Schmelzindex (Vernetzungsgrad) (L. D. Orazio und Mitarb., J. Mater. Sci. 21 [1986], S. 983; ebenda 22 [1987], S. 429; E. P. 228 229, DD 83463, DD 248 368).

Auch in seiner hydrolysierten und somit gegenüber dem Polyamid reaktiven Form, d. h. als Ethylen-Vinylalkohol-Copolymere (EVAl) mit unterschiedlichem Restacetatgehalt, ist diese Schlagzähkomponente einsetzbar (DE 3624 577, DE 3637 446, FR 2586 027, JP 62.13449).

Eine bessere Haftung gegenüber dem Polyamid besitzen Polyolefine, wie Ethylen- und/oder Propylencopolymere, -ter-polymere und -pfropfpolymere, die einen bestimmten Anteil an Carboxylgruppen besitzen (s. Cartasegna u. W. Heider, Gummi, Fasern, Kunststoffe 41 [1988] 3, 110-119 und 5, 224-226; W. Illing, Kunststoffe 80 [1990] 7, 838-842).

Dabei können carboxylgruppenhaltige ungesättigte Verbindungen, insbesondere die niedermolekularen α, β-ethylenisch ungesättigten Mono- und Dicarbonsäuren bzw. deren Anhydride, wie Acrylsäure, Methacrylsäure und Maleinsäureanhydrid (MSA), in die olefinische Hauptkette unter Bildung von Olefinco- und -terpolymeren eingebaut oder in Form von Seitenketten (Pfropfreiser) auf diese aufgepfropft werden.

Bekannt ist die Herstellung verschiedener Olefin/(Meth-) Acrylsäure- oder MSA-Copolymerisate (GB 998 439, DE 3604 376, DD 161 136, DD 248 368) bzw. der entsprechenden, teilweise durch Metallionen neutralisierten Ionomeren (US 3373 224, US 3845 163, US 3 873 667, US 4 478 978) sowie von Ethylen/α-Olefin oder (Meth-)Acrylat/(Meth-)Acrylsäure oder MSA-Terpolymeren (E. P. 106 999, WO 86/063 97, WO 88/035 43, US 4 174 358) und von entsprechend carboxylierten EVA- bzw. EVAl-Terpolymeren (US 4595 730, DE 3604 348, DE 3604 376), die als verträgliche Schlagzähmodifikatoren bzw. -modifikatorkomponenten in Polyamid-Formmassen eingesetzt werden können.

Breiteren Raum nimmt die Pfropfung von carboxylgruppenhaltigen Monomeren, einschließlich MSA und anderen Anhydriden, auf ein olefinisches Rückgratpolymerisat aus der Reihe der Polyethylene (HDPE, LDPE, LLDPE) (DE 1932 739, DE 2420 942, US 2970 129, US 3177 269, US 3177 270, US 3646 165, US 3987 122, E. P. 187 659), Ethylen/Vinyl- oder (Meth)Acrylsäureester-Copolymeren, insbesondere EVA, Ethylen-Ethylacrylat- und Ethylen-Butylacrylat-Copolymeren (DE 2329 780, DE 2342 486, EP 403 109), Ethylen/Propylen-Cooder -Terpolymeren (EPM, EPDM) (E. P. 266 221, JP 62.177 065, JP 62.179 546, JP 62.43 456; US 41 74 358, WO 91/07 467, WO 91/18 053) und isotaktischen Polypropylene (PP) (E. P. 50 471, E. P. 180 302, E. P. 235 876, WO 88/023 87, WO 88/061 74, JP 62.59 652, JP 62.59 653) ein.

Als Polymerrückgrat können auch Mischungen, insbesondere solche aus Polyethylen oder PP mit EVA und/oder EP(D)M, eingesetzt werden (E. P. 128 775, E. P. 287 140, WO 88/061 74, WO 91/18 053, JP 8246(1982)).

Die auf diese Weise carboxylierten Polyolefine haften sehr gut an der Polyamidmatrix und fungieren als Verträglichkeitsvermittler zwischen der Polyamid- und der reinen Polyolefinkomponente. Neben einer wirksamen Erhöhung der Schlagzähigkeit werden gleichzeitig die für die vorgesehenen Einsatzgebiete notwendigen Festigkeits- und Steifigkeitskennwerte, einschließlich die durch die starke Zurückdrängung der Wasseraufnahme bedingte Dimensionsstabilität, gesichert (F. Altendorfer u. E. Seitl, Kunststoffberater 3 [1990], 33-37; R. J. M. Borggreve u. a., Macromol. Chem., Macromol. Symp. 16[1988], 195-207).

Das betrifft vor allem Polyamid/Polyethylen-Blends, deren Verträglichkeit durch einen Anteil an carboxylierten, einschließlich Säureanhydrid- oder Epoxygruppen aufweisenden Polyethylen erreicht wird (US 3373 222, US 3373 223, US 3373 224, US 3873 667), und Polyamid/Polypropylen-Blends, die auf die gleiche Weise funktionalisierte Polypropylene oder Propylenco- bzw. -terpolymere enthalten (F. Ide u. A. Hasegawa, J. Appl. Polymer Sci. 8 [1974], 963-974; US 3845 163, US 4174 358, JP 59.149 940, JP 490 18 (1985), JP 110 740 (1985), JP 232 135 (1984)).

Die als Haftvermittler/Schlagzähmodifikator in Polyamid/Polyolefin-Formmassen eingesetzten carboxylierten Polyolefine werden entweder mittels Suspensions- bzw. Lösungspfropfverfahren unter Verwendung eines für das Rückgratpolymerisat geeigneten organischen Lösungsmittels (E. P. 187 660; F. Ide u. a., Kobunshi Kagaku 25 [1968], S. 167; N. G. Gaylord, J. Polym. Sci., Polym. Lett. Ed. 20 [1982], S. 481; ebenda 21 [1983], S. 23) oder zumeist in der Polymerschmelze, gegebenenfalls direkt im Prozeß der reaktiven Schmelzmischung, hergestellt (E. P. 82 704, E. P. 128 775, E. P. 235 876, E. P. 266 221; WO 88/061 74; US 3862 265, US 4.174 358, E. P. 50 471, E. P. 180.302, E. P. 403 109).

Ein verbessertes Schlagzähverhalten, insbesondere für PA 6/PP- oder PA 6.6/PP-Blends mit höherem Gesamtpolyolefinanteil (F. Ide u. A. Hasegawa, J. Appl. Polym. Sci. 18 [1974], 963-974), wird durch Zusatz einer in der Schmelze pfropfcarboxylierten EP(D)M/PP-Mischung (E. P. 235 876, E. P. 266 221, WO 88/061 74), einschließlich möglicher weiterer elastifizierender Komponenten wie Kautschuke und/oder mineralische Weichmacheröle (US 4338 413; US 4555 546; DE 3805 377; E. P. 266 221, WO 86/063 97), erhalten.

Auch durch diese carboxylierten EP(D)M/PP und/oder Polyethylen-Kombinationen (E. P. 235 876, E. P. 287 140; WO 91/18 053) wird nur ein eng begrenzter Zähigkeitsanstieg erreicht. Die aus dem Stand der Technik bekannten Polyamid/Polyolefin-Formmassen sind im allgemeinen komplexe Mehrkomponentensysteme. Die beschriebenen Blendeigenschaften sind jedoch für anspruchsvolle Anwendungen, wo ein ausgewogenes Eigenschaftsbild bezüglich Zähigkeit, Festigkeit und Steifigkeit gefordert wird, nicht ausreichend. Zurückzuführen ist dieser Nachteil auf die begrenzte Wirksamkeit der als Schlagzähmodifikatoren eingesetzten carboxylierten Polyolefine, deren Herstellung im allgemeinen in der Schmelze oder auch in einer wäßrigen und/oder organischen Suspension/Lösung - sehr aufwendig ist.

Gegenüber der erreichbaren Anhebung des mechanischen Kennwertniveaus sowie der Sicherung einer ausreichenden Wärmeformbeständigkeit erscheint der hohe technischtechnologische Aufwand zur Herstellung der carboxylierten Polyolefine nicht gerechtfertigt.

Die Aufgabe der Erfindung liegt daher in der Entwicklung von Polyamid/Polyolefin-Blends mit verbesserter Trockenschlagzähigkeit sowie ausreichender Festigkeit, Steifigkeit und Wärmeformbeständigkeit auf der Grundlage von Zusammensetzungen aus
- 30 bis 97 Masseteilen, vorzugsweise 40 bis 90 Masseteilen, teilkristallinem Polyamid, vorzugsweise PA 6 und/oder PA 6.6 und/oder ihren Mischpolykondensaten PA 6/6.6, und
- 3 bis 70 Masseteilen, vorzugsweise 10 bis 60 Masseteilen, Polyolefin, bestehend zu 0 bis 90, vorzugsweise 10 bis 70 Masse-%, aus nichtfunktionalisierten Olefinhomo- und/oder -mischpolymeren sowie zu 10 bis 100, vorzugsweise 30 bis 90 Masse-%, aus einem mittels Pfropfung von α,β-ethylenisch ungesättigten Mono- und/oder Dicarbonsäuren bzw. ihren Anhydriden auf olefinisches Rückgratpolymerisat, wie Ethylen- und/oder Propylenhomo- bzw. -mischpolymere, vorzugsweise EVA, erhaltenen carboxylierten Polyolefin oder Polyolefingemisch.

Erfindungsgemäß wird die Aufgabe dadurch gelöst, daß der Gelmassengehalt der unter Ausschluß wäßriger oder organischer Dispergier-, Lösungs- bzw. Verdünnungsmittel bei Temperaturen zwischen 40 und 100 °C unter Verwendung radikalischer peroxidischer und/oder diazogruppenhaltiger Initiatoren (Festphasenpfropfcopolymerisation) hergestellten carboxylierten Komponenten zwischen 5 und 95 %, vorzugsweise zwischen 10 und 80 %, für Carboxylgruppen-Massenanteile zwischen 0,2 und 10 %, vorzugsweise zwischen 0,5 und 6,0 %, beträgt.

Bevorzugt sind die aus einem durch Pfropfung von α,β-ethylenisch ungesättigten Mono- oder Dicarbonsäuren bzw. ihren Anhydriden, einschließlich ihrer Mischungen untereinander sowie Mischungen mit carboxylgruppenfreien Comonomeren, auf EVA erhaltenen carboxylierten (Co-)Pfropfprodukte mit einem Gelmassengehalt zwischen 20 und 90 %, vorzugsweise zwischen 35 und 75 %, für Carboxylgruppen-Massenanteile zwischen 0,3 und 8,0 %, vorzugsweise zwischen 1,0 und 3,0 %.

Als Gelmassengehalt (m_{Gel}) wird der unter definierten Bedingungen - 2g carboxyliertes Pfropfprodukt in 100 ml Xylol nach 12-stündiger Behandlung unter Rückfluß - erhaltene prozentuale Lösungsrückstand bezeichnet.

Die Carboxylgruppenkonzentration, d. h., der auf die Pfropfproduktmasse bezogene Carboxylgruppen-Massenanteil ([-COOH]), wird durch alkalische Titration unter Verwendung normaler KOH- und HCl-Lösungen, letztere zur Zurücktitration, ermittelt. Unter diesen Bedingungen liegt aufgepfropftes MSA in hydrolysierter Form vor.

Als besonders geeignete Rückgratpolymere für die herzustellenden carboxylierten Polyolefine werden verwendet:
- EVA mit einem Massenanteil an einpolymerisierten Vinylacetateinheiten zwischen 5 und 25 % sowie einem Schmelzindex MFI (190 °C, 2,16 kg) nach DIN 53 735 zwischen 0,1 und 20 g/10 min.
- Polyethylene mit einer gewichtsmittleren Molmasse zwischen 2,5 · 10⁴ und 1,0 · 10⁶, einer Dichte zwischen 0,92 und 0,97 g/cm³ sowie Schmelzindices zwischen MFI (190 °C, 21,6 kg) von 5 g/10 min und MFI (190 °C, 2,16 kg) von 50 g/10 min.
- Polypropylene mit gewichtsmittleren Molmassen zwischen 2,5 · 10⁴ und 5,0 · 10⁵, einem Isotaxieindex zwischen 50 und 99 % sowie Schmelzindices MFI (190 °C, 5,0 kg) zwischen 1,0 und 50 g/10 min.
- Ethylen-Propylen-unkonjugiertes Dien(Dicyclopentadien und/oder Ethylidennorbornen)-Terpolymere (EPDM) der Zusammensetzung 60 bis 85 Masse-% Ethylen-/15 bis 40 Masse-% Propylen-/0,2 bis 2,5 Masse-% Dieneinheiten sowie einer Mooney-Viskosität (ML [1 + 4] 125 °C) zwischen 25 und 95, wobei das EPDM gegebenenfalls in Form eines Compounds mit einem Ethylen- und/oder Propylenhomopolymeranteil zwischen 2 und 20 Masse-% vorliegen kann.

Die olefinischen Rückgratpolymere können innerhalb eines breiten Teilchengrößenbereiches zwischen etwa 20 µm und 5 mm als Pulver, Granulat, Blättchen, Schuppen und/oder Flocken, vorzugsweise in pulveriger Form (50 - 800 µm), eingesetzt werden.

Die in den Polyamid/Polyolefin-Formmassen verwendeten nichtfunktionalisierten Polyolefine (frei von Carboxylgruppen und anderen mittels Pfropfung zusätzlich eingebrachten polaren Gruppen) können aus der Gruppe der Polyethylene (HDPE, LDPE, LLDPE), der isotaktischen Polypropylene (PP) sowie der Ethylenco- bzw. -terpolymeren, vorzugsweise EVA mit Vinylacetatmonomereinheiten zwischen 2 und 50 Masse-% und EP(D)M mit 5 bis 40 Massenanteilen Propyleneinheiten, ausgewählt werden.

Die als Formmassenkomponente und/oder Rückgratpolymerisat eingesetzten Polyethylene sowie Polypropylene können auch einen geringen Massenanteil eines einpolymerisierten Comonomeren, insbesondere 0,1 bis 5,0 Masse-% an C3- bis C6-Olefinen, enthalten.

Die Carboxylierung der vorgenannten Polyolefine und Olefinco- bzw. -terpolymeren, die die erfindungsgemäßen Carboxylgruppen- und Gelmassengehalte enthalten sollen, kann in einer separaten, d. h. vom Compoundierungsprozeß unabhängigen Pfropfpolymerisationsstufe in einem trockenen, vorzugsweise pulverigen/körnigen Festbett bei Polymerisationstemperaturen zwischen 40 und 100 °C sowie im allgemeinen bei Normaldruck vorgenommen werden.

Die eingesetzten Polyamide sollen eine relative Viskosität (gemessen in einer 1-masseprozentigen Lösung in m-Kresol bei 25 °C) ηᵣₑₗ zwischen 1,5 und 5,0, vorzugsweise zwischen 2,0 und 4,0, aufweisen.

Des weiteren können übliche Additive, wie Gleit- und Entformungsmittel, Füll- und Verstärkungsstoffe, Pigmente/Farbstoffe sowie Thermostabilisatoren, Antioxidantien und/oder Lichtschutzmittel, den erfindungsgemäßen Formmassen hinzugesetzt werden. Dabei hat sich für verschiedene Einsatzgebiete der Formmassen, die eine carboxylierte Polyolefin-Komponente mit hohem Gelmassengehalt enthalten, besonders der Zusatz eines höheren Füllstoffanteils, im allgemeinen von 10 bis 50 Masse-%, bezogen auf die gesamte Formmasse, als vorteilhaft erwiesen.

Hierbei offenbart sich ein überraschender Effekt der mittels obengenannter Feststoffphasenpfropfprodukte ausgerüsteten Polyamid/Polyolefin-Blends: eine hohe (Kerb-)Schlagzähigkeitsreserve, die in erster Linie den einen positiven Carboxylgruppen-Konzentrationsgradienten zur Polyolefinteilchenoberfläche hin besitzenden funktionalisierten Pfropfprodukten zuzuordnen ist, so daß mit Füllgraden zwischen 0,3 und 0,5 immer noch erhöhte Schlagzähkennwerte erreicht werden.

Die Herstellung der erfindungsgemäßen Formmassen erfolgt durch Schmelzmischung unter definierten Temperatur- und Scherbedingungen zweckmäßigerweise in üblichen Knetern, Einoder Mehrwellenextrudern. Dabei können sämtliche 5 Komponenten in einem Schritt gemischt oder auch einzelne Komponenten erst zu einem späteren Zeitpunkt hinzugesetzt werden.

Die erfindungsgemäßen Formmassen sind entsprechend ihres in weiten Grenzen "einstellbaren" Eigenschaftsbildes im Spritzguß und Extrusionssektor, insbesondere für den Kfz-Bereich, in der Elektrotechnik sowie im Maschinenbau, geeignet.

### Ausführungsbeispiel

In einem Doppelschneckenextruder werden Formmassen auf Basis von getrocknetem PA 6 (relative Viskosität von 2,7, weitere Kennwerte in Tab. 1) - im allgemeinen unter Einhaltung einer Massetemperatur von 220 °C - bzw. von PA 6.6 (relative Viskosität von 2,8, weitere Kennwerte in Tab. 1) - im allgemeinen unter Einhaltung einer Massetemperatur von 260 °C - sowie des Zusatzes der nichtfunktionalisierten Polyolefinkomponente (n) (Kennwerte für HDPE, PP und EVA in Tab. 1) und des carboxylierten Polyolefins bzw. Polyolefingemisches (Kennwerte in Tab. 2) hergestellt.

Die zu den erfindungsgemäßen carboxylierten Polyolefinen führende Pfropfung ist derart durchgeführt worden, daß zuerst das olefinische Rückgratpolymere (Tab. 2/Spalte 2) in den gereinigten und unter einer Stickstoffatmosphäre stehenden Reaktor vorgelegt, danach das Carboxylmonomere bzw. -monomergemisch (Acrylsäure und/oder MSA) in einer Menge zwischen 2 und 10 %, bezogen auf die Rückgratpolymermasse, gegebenenfalls in Abmischung mit Styren (Tab. 2/Spalte 3: Acrylsäure/MSA/Styren-Massenverhältnis), sowie der Initiator bzw. das Initiatorgemisch, wie z. B. Dilauroyl- und/oder Dibenzoylperoxid in einer auf die Rückgratpolymermasse bezogenen Konzentration zwischen 0,5 und 1,5 %, hinzugefügt, darauffolgend nach einer kürzeren 5 Dispergierphase von ca. 30 min. der Polymerisationsansatz auf eine Reaktionsendtemperatur zwischen 70 und 90 °C aufgeheizt und bis zur Erreichung eines Monomerumsatzes zwischen 80 und 93 % - entsprechend einer Gesamtpolymerisationsdauer zwischen 3 und 5,5 h - auf dieser Temperatur gehalten wird.

Mittels Titration ist der auf die gesamte Pfropfproduktmasse bezogene Carboxylgruppenanteil [-COOH] und durch Extraktion der Gelmassengehalt m_{Gel} bestimmt worden (Tab. 2/Spalten 4 und 5).

Die in Tabelle 2 zur Gegenüberstellung aufgeführten "gelfreien" Vergleichsprodukte wurden durch Schmelzpfropfung (Reaktionstemperaturen zwischen 165 und 220 °C entsprechend dem verwendeten olefinischen Rückgratpolymerisat) unter bekannten Bedingungen (Polymerisationszeiten in einem Extruder zwischen 5 und 20 min sowie Verwendung von Initiatoren, wie Di-tert.-butylperoxid oder Dicetylperoxid, in Konzentrationen zwischen 0,02 und 0,2 Masse-%) hergestellt.

In Tabellen 3.1 und 3.2 sind die Formmassenzusammensetzungen angegeben, für die die Kennwerte, einschließlich für analoge Blendzusammensetzungen unter Verwendung obengenannter "gelfreier" Schmelzpfropfprodukte zum Vergleich, in Tabellen 4.1 und 4.2 aufgeführt sind.

Im einzelnen ist wie folgt verfahren worden:
Aus den Formmassen wurden auf einer Spritzgießaschine des Typs KuASY 150/50 (Werkzeug: beheizte Verschlußdüse (235 + 10) °C für PA 6-Mischungen bzw. (265 + 10) °C für PA 6.6-Mischungen) ISO-Prüfstäbe in den Abmessungen 80 mm x 10 m x 4 mm hergestellt.

Gemessen wurden für die in den Tabellen 3.1 und 3.2 aufgeführten Formmassen
die in den Tabellen 4.1 und 4.2 angegebenen Kennwerte:
- Schlagzähigkeit nach CHARPY sowie (aₙ)
- Kerbschlagzähigkeit nach CHARPY bei 23 °C (aₖ) und - 20 °C in kJ/m² (DIN 53 453)
- 3,5 %-Biegespannung in N/mm² (DIN 53 452) (δ_{b 3,5})
- Biege-Elastizitätsmodul in N/mm² (E_{b}) (DIN 53 457)
- Zugfestigkeit (50 mm/min) in N/mm² (δ_{Z}) (DIN 53 455)
- Kugeldruckhärte (30 sec) in N/mm² (H_{K(30")}) (DIN 53 456)
- VICAT-Erweichungstemperatur (Medium: Luft, (T_{V(B)}) 5 kg), in °C (nach DIN 53 460)
ermittelt.

Anhand der in Tabellen 4.1 und 4.2 angeführten Gegenüberstellung zwischen verschiedenen erfindungsgemäßen Formmassen (Verwendung von carboxylierten Polyolefinen mit m_{Gel}-Werten zwischen 12 und 80 Masse-%) und Vergleichsblends (Verwendung carboxylierter Polyolefine mit m_{Gel}-Werten zwischen 0,0 und 1,4 Masse-%) treten die vorteilhaften anwendungs- und verarbeitungstechnischen Eigenschaften der erfindungsgemäß zusammengesetzten Blends deutlich hervor.

Die jeweils analog zusammengesetzten Vergleichsblends sind mit der gleichen Nummer wie die entsprechende erfinderische Formmasse und einem zusätzlichen "S" ("Schmelze"-Modifikator) gekennzeichnet.

**Tabelle 1:**

| Charakteristik der eingesetzten Polyamide und Polyolefine (PO) (letztere als direkte Blendkomponente und/oder rückgratpolymerisat für die Pfropfcarboxylierung und somit Bestandteil des carboxylierten Polyolefins) | | | | | | | | |
|---|---|---|---|---|---|---|---|---|
| Kennwert/Maßeinheit | Polyamide | | Polyolefine | | | | | |
| | PA 6 | PA 6.6 | HDPE-I | HDPE-II | PP-I | PP-II | EVA-I | EVA-II |
| mittl. Molmasse x 10⁻³ | | | 147 | 50 | 126 | 159 | 141 | 177 |
| Dichte [g/cm³] | 1,12 | 1,13 | 0,952 | 0,956 | 0,913 | 0,910 | 0,934 | 0,937 |
| einpolym. Comonomeres [Ma-%] | - | - | 1,1 | 1,3 | - | 3,0 C₄₋₆ Olefine | 15,3 | 18,2 |
| | | | Butene | | | | Vinylacetet | |
| MFI (5 kg) [g/10 min] | | | | | | | | |
| 190°C | | | 0,3 | 18 | 5,2 | 29 | 3,6 | 1,9 |
| 240°C | 82 | | | | | | (2,16 kg) | |
| 270°C | | 72 | | | | | | |
| aₙ [kJ/m²] | | | | | | | | |
| 23°C | o. B. | o. B. | o. B. | o. B. | o. B. | o. B. | o. B. | o. B. |
| 0°C | | | o. B. | o. B. | o. B. | o. B. | o. B. | o. B. |
| -20°C | o. B. | o. B. | | | | | | |
| aₖ [kJ/m²] | | | | | | | | |
| 23°C | 3,7 | 5,0 | 7,2 | 6,0 | 5,2 | 7,9 | 12,5 | 14,1 |
| -20°C | 3,2 | 4,5 | | | 3,0 | 3,8 | | |
| δb 3,5 [N/mm²] | 80 | 91 | 18 | 15 | 31,5 | 24 | | |
| E_{b} [N/mm²] | 2340 | 2660 | 900 | 800 | 1550 | 1400 | 150 | 115 |
| δ_{Z} [N/mm²] | 74 | 83 | 25 | 25 | 35 | 32 | 9 | 8 |
| H_{K(30")} [N/mm²] | 124 | 141 | 38 | 40 | 65 | 54 | | |
| T_{V(A)}(1 kg) [°C] | | | | | 158 | 154 | 76 | 70 |
| T_{V(B)}(5 kg) [°C] | 198 | 225 | 121 | 123 | | | | |
| o. B. - ohne Bruch (100 % der ISO-Prüfkörper) | | | | | | | | |

**Tabelle 2:**

| Charakteristik der eingesetzten carboxylierten Polyolefine | | | | | | |
|---|---|---|---|---|---|---|
| Lfd. Nr. | Pfropfpolymerisationskomponenten | | | | Produktkennwerte | |
| | Rückgrat | Massenverhältnis | | | [-COOH] | m_{Gel} |
| | | Acrylsäure | MSA | Styren | [Ma-%] | [Ma-%] |
| 1 | HDPE-I | 1 | 0,2 | - | 5,8 | 78,3 |
| 2 | HDPE-II | 1 | - | 0,67 | 3,1 | 12,5 |
| Vgl. 3 | HDPE-II | 1 | - | 0,67 | 0,5 | 0,0 |
| 4 | PP-I | 1 | - | 0,67 | 3,14 | 14,9 |
| 5 | PP-I | 1 | 0,25 | - | 5,06 | 55,3 |
| 6 | PP-II | 1 | - | - | 5,26 | 71,6 |
| Vgl. 7 | PP-I | 1 | 0,25 | - | 4,11 | 1,4 |
| 8 | EVA-II | 1 | - | - | 1,87 | 65,2 |
| 9 | EVA-I | 1 | 0,5 | - | 4,31 | 71,3 |
| 10 | EVA-II | - | 1 | - | 1,64 | 61,0 |
| 11 | EVA-I | 1 | 0,25 | 0,5 | 2,93 | 16,5 |
| 12 | EVA-I | 1 | 0,5 | - | 2,81 | 55,3 |
| Vgl. 13 | EVA-II | 1 | - | - | 0,95 | 1,3 |
| Vgl. 14 | EVA-35¹⁾ | 1 | - | - | 2,34 | 1,1 |
| Vgl. 15 | EVA-35 | 1 | - | 0,5 | 1,31 | 0,0 |
| 16 | EPDM²⁾ | - | 1 | - | 1,57 | 25,2 |
| 17 | EPDM | - | 1 | 0,5 | 1,10 | 13,3 |
| Vgl. 18 | EPDM | - | 1 | - | 1,71 | 0,2 |

| | | | | | | |
|---|---|---|---|---|---|---|
| ¹⁾ EVA-35: 35 Masse-% Vinylacetateinheiten, Dichte = 0,949 g/cm³, MFI (190°C, 2,16 kg) = 2,8 g/10 min | | | | | | |
| ²⁾ EPDM: 65 Masse-% Ethylen-/34 Masse-% Propylen-/1 Masse-% Dicyclopentadieneinheiten; Mooney Viskosität (ML [1 + 3] 127 °C) = 36; MFI (230 °C, 5 kg) = 1,9 g/10 min | | | | | | |

**Tabelle 3.1:**

| Zusammensetzung der ungefüllten PA 6-Formmassen (Angaben in Masse-%) | | | | | | | | | | | | | | | | | | | | |
|---|---|---|---|---|---|---|---|---|---|---|---|---|---|---|---|---|---|---|---|---|
| Blendkomponenten | Erfindungsgemäße Formmassen | | | | | | | | | | | | Vergleichsformmassen | | | | | | | |
| | 1 | 2 | 3 | 4 | 5 | 6 | 7 | 8 | 9 | 10 | 11 | 12 | 1S | 3S | 4S | 5S | 7S | 9S | 11S | 12S |
| PA 6 | 80 | 70 | 80 | 76,8 | 72,6 | 60 | 56 | 56 | 50 | 50 | 40 | 30 | 80 | 80 | 76,8 | 72,6 | 56 | 50 | 40 | 30 |
| HDPE-I | | | | | | | | | | | 40 | | | | | | | | 40 | |
| HDPE-II | | | | 10 | | 10 | | | | | | | | | 10 | | | | | 50 |
| PP-I | | | | | | | | | 20 | | | | | | | | | 20 | | |
| PP-II | | | 10 | | 10 | | | | | 30 | | 50 | | 10 | | 10 | | | | 50 |
| EVA-I | | | | | | 10 | | 10 | | | | | | | | | | | | |
| carboxyl. (c)PO (Tab. 2) | | | | | | | | | | | | | | | | | | | | |
| cHPDE/Nr. 1 | | | | | | | 14 | | | | | | | | | | | | | |
| cHPDE/Nr. 2 | | | | 4,2 | | | | 14 | | | | | | | | | | | | |
| cHPDE/Vgl. 3 | | | | | | | | | | | | | | | 4,2 | | 14 | | | |
| cPP/Nr. 4 | | | | | 8,4 | | | | | | | | | | | | | | | |
| cPP/Nr. 5 | | | | | | | | | 30 | | | | | | | | | | | |
| cPP/Vgl. 7 | | | | | | | | | | | | | | | | 8,4 | | 30 | | |
| cEVA/Nr. 8 | 20 | | | | 9,0 | 20 | 30 | | | | | | | | | | | | | |
| cEVA/Nr. 9 | | 30 | | | | | | | | | | | | | | | | | | |
| cEVA/Nr. 10 | | | | 9,0 | | | | | | | | 10 | | | | | | | | |
| cEVA/Nr. 11 | | | | | | | | 20 | | | | | | | | | | | | |
| cEVA/Nr. 12 | | | | | | | | | | | 10 | | | | | | | | | |
| cEVA/Vgl. 13 | | | | | | | | | | | | | 20 | | | | 30 | | 10 | |
| cEVA/Vgl. 14 | | | | | | | | | | | | | | | 9,0 | | | | | 10 |
| cEVA/Vgl. 15 | | | | | | | | | | | | | | | | 9,0 | | | | |
| cEPDM/Nr. 16 | | | 10 | | | | | | | 20 | | | | | | | | | | |
| cEPDM/Nr. 17 | | | | | | | | | | | 10 | 10 | | | | | | | | |
| cEPDM/Vgl. 18 | | | | | | | | | | | | | | 10 | | | | | 10 | 10 |

**Tabelle 3.2:**

| Zusammensetzung der gefüllten PA 6-Formmassen sowie der ungefüllten und gefüllten PA 6.6-Formmassen (Angaben in Masse-%) | | | | | | | | | | | | | | | | | | | | |
|---|---|---|---|---|---|---|---|---|---|---|---|---|---|---|---|---|---|---|---|---|
| Blendkomponente | Erf. PA 6-Blends | | | | | | PA6-Vgl-Blends | | | Erf.PA 6.6-Blends | | | | | | | PA6.6-VglBlends | | | |
| | 13 | 14 | 15 | 16 | 17 | 18 | 14S | 15S | 17S | 19 | 20 | 21 | 22 | 23 | 24 | 25 | 19S | 22S | 23S | 25S |
| PA 6 | 65,3 | 56,0 | 53,8 | 49 | 42,2 | 38,5 | 56 | 53,8 | 42,2 | | | | | | | | | | | |
| PA 6.6 | | | | | | | | | | 70 | 80 | 76,8 | 72,6 | 65,3 | 56,8 | 49 | 70 | 22,6 | 65,3 | 49 |
| HDPE-II | | | | | | | | | | | | 10 | | | | | | | | |
| PP-II | 8,5 | 7,0 | 7,0 | | 5,5 | | 7,0 | 7,0 | 5,5 | | 10 | | 10 | 8,5 | 30 | | | 10 | 8,5 | |
| carboxyl. (c)PO (Tab. 2) | | | | | | | | | | | | | | | | | | | | |
| cHPDE/Nr. 2 | | | | | | | | | | | | 4,2 | | | | | | | | |
| cPP/Nr. 1 | 3,5 | | 2,9 | | | | | | | | | | 8,4 | 3,5 | 4,2 | | | | | |
| cPP/Nr. 6 | | | | | 2,3 | | | | | | | | | | | | | | | |
| CPP/Vgl. 7 | | | | | | | | 2,9 | 2,3 | | | | | | | | | 8,4 | 3,5 | |
| cEVA/Nr. 8 | | | | 21 | | 16,5 | | | | | | 9,0 | | | 9,0 | | | | | |
| cEVA/Nr. 9 | 7,7 | | 6,3 | | 5,0 | | | | | | | | 9,0 | 7,7 | | | | | | |
| cEVA/Nr. 10 | | | | | | | | | | | | | | | | 21 | | | | |
| cEVA/Nr. 11 | | | | | | | | | | 30 | | | | | | | | | | |
| cEVA/Vgl. 13 | | | | | | | | | 5,0 | | | | | | | | | | | |
| cEVA/Vgl. 14 | | | | | | | | 6,3 | | | | | | | | | 30 | 9,0 | 7,7 | 21 |
| cEPDM/Nr. 16 | | 7,0 | | | | | | | | | | | | | | | | | | |
| cEPDM/Nr. 17 | | | | | | | | | | | 10 | | | | | | | | | |
| cEPDM/Vgl.18 | | | | | | | 7,0 | | | | | | | | | | | | | |
| Kreide¹⁾ | 15 | 30 | | 30 | 45 | | 30 | | 45 | | | | | 15 | | 30 | | | 15 | 30 |
| Anhydrit²⁾ | | | 30 | | | 45 | | 30 | | | | | | | | | | | | |

| | | | | | | | | | | | | | | | | | | | | |
|---|---|---|---|---|---|---|---|---|---|---|---|---|---|---|---|---|---|---|---|---|
| ¹⁾ Kreide: Mittlerer Teilchendurchmesser - 2,2 µm | | | | | | | | | | | | | | | | | | | | |
| ²⁾ Anhydrit: Mittlerer Teilchendurchmesser - 35 µm | | | | | | | | | | | | | | | | | | | | |

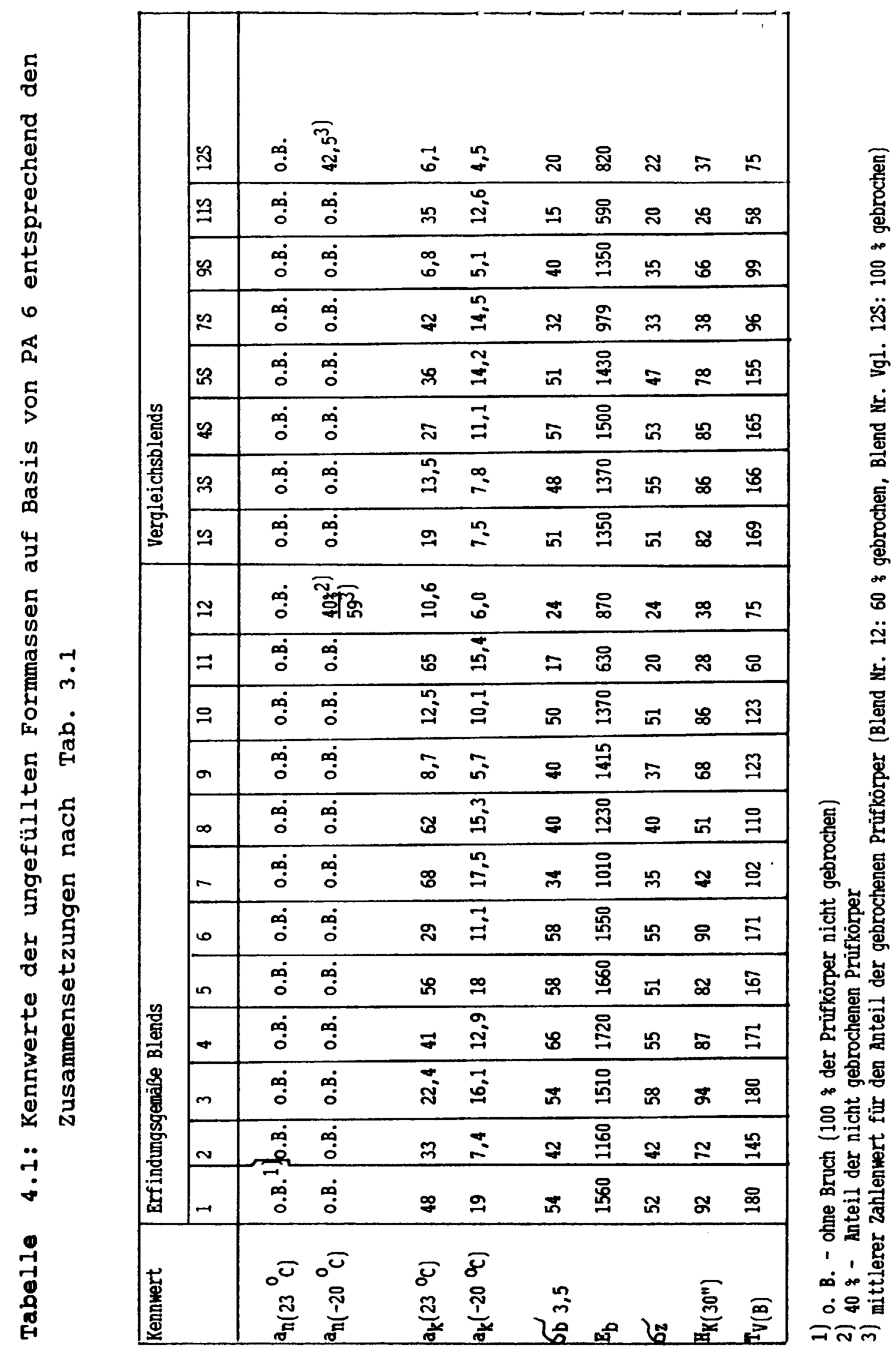

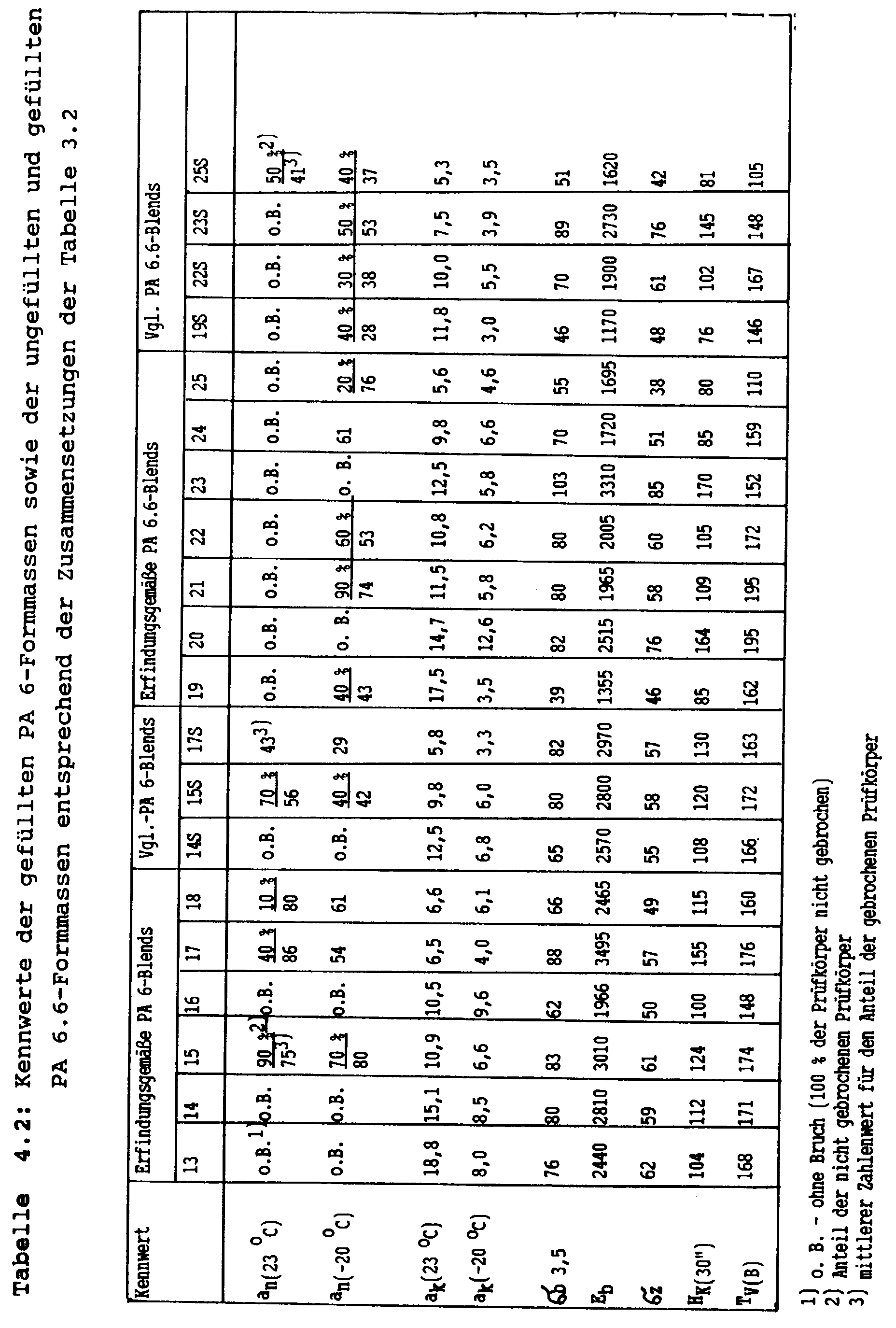

## Patentansprüche

1. Schlagzähe Polyamid-Formmassen auf der Grundlage von Zusammensetzungen aus
- 30 bis 97 Masseteilen teilkristallinem Polyamid, mit einer relativen Viskosität (gemessen in einer -1 masseprozentigen Lösung in m-Kresol bei 25 °C) zwischen 1.5 und 5, und
- 3 bis 70 Masseteilen Polyolefin, bestehend zu 0 bis 90 Masse-% aus nichtfunktionalisierten Olefinhomound/oder -mischpolymeren sowie 10 bis 100 Masse-% aus einem mittels Pfropfung von α,β-ethylenisch ungesättigten Mono- und/oder Dicarbonsäuren bzw. ihren Anhydriden auf olefinisches Rückgratpolymerisat erhaltenen carboxylierten Polyolefin oder Polyolefingemisch, gekennzeichnet dadurch, daß der als prozentualer Lösungsrückstand entsprechend einer 12-stündigen Behandlung unter Rückfluß von 2 g carboxyliertem Pfropfprodukt in 100 ml Xylol erhaltene Gelmassengehalt der mittels Feststoffphasenpfropfung hergestellten carboxylierten Komponenten zwischen 5 und 95 % für Carboxylgruppen-Masseanteile zwischen 0,2 und 10 % beträgt.

2. Schlagzähe Polyamid-Formmassen nach Anspruch 1, gekennzeichnet dadurch, daß als teilkristallines Polyamid PA 6 und/oder PA 6.6 und/oder ihre Mischpolykondensate PA 6/6.6 verwendet werden.

3. Schlagzähe Polyamid-Formmassen nach den Ansprüchen 1 und 2, gekennzeichnet dadurch, daß als olefinisches Rückgratpolymerisat Ethylen- und/oder Propylenhomo- bzw. -mischpolymere verwendet werden.

4. Schlagzähe Polyamid-Formmassen nach den Ansprüchen 1 bis 3, gekennzeichnet dadurch, daß in den Mischungen der Polyolefinanteil aus einem durch Pfropfung von α,β-ethylenisch ungesättigten Mono- oder Dicarbonsäuren bzw. ihren Anhydriden, einschließlich ihrer Mischungen untereinander sowie Mischungen mit carboxylgruppenfreien Comonomeren, auf Ethylen-Vinylacetat-Copolymere mit einem Massenanteil an Vinylacetateinheiten zwischen 5 und 25 % und einem Schmelzindex MFI (190 °C, 2,16 kg) zwischen 0,1 und 20 g/10 min erhaltenen carboxylierten (Co-)Pfropfprodukt mit einem Gelmassengehalt zwischen 20 und 90 % für Carboxylgruppen-Massenanteile zwischen 0,3 und 8,0 % besteht.

5. Schlagzähe Polyamid-Formmassen nach den Ansprüchen 1 bis 4, gekennzeichnet dadurch, daß der Gelmassengehalt der carboxylierten Komponenten zwischen 10 und 80 % für Carboxylgruppen-Massenanteile zwischen 0,5 und 6,0 % beträgt.

6. Schlagzähe Polyamid-Formmassen nach den Ansprüchen 1 bis 5, gekennzeichnet dadurch, daß der Gelmassengehalt der carboxylierten Komponenten zwischen 35 und 75 % für Carboxylgruppen-Massenanteile zwischen 1,0 und 3,0 % beträgt.

## Claims

1. Impact resistant polyamide moulding compounds on the basis of compositions of
- 30 to 97 parts by weight of partially crystalline polyamide with the relative viscosity (measured in a 1 per cent by weight solution in m-cresol at 25 °C) between 1.5 and 5 and
- 3 to 70 parts by weight of polyolefin containing 0 to 90 per cent by weight of non-functionalised olefin homopolymers and/or olefin copolymers and 10 to 100 per cent by weight of carboxylated polyolefin or polyolefin mixture formed through grafting of α,β-ethylenically unsaturated monocarboxylic and/or dicarboxylic acids or their anhydrides onto olefinic backbone polymer characterised in that the gel content of the carboxylated components formed through solid-phase grafting and available as the percentage residue from solution after a 12-hour treatment at a reflux of 2 g of carboxylated graft product in 100 ml of xylene, is between 5 and 95 % for parts by weight of carboxylic groups between 0.2 and 10 %.

2. Impact resistant polyamide moulding compounds according to claim 1 characterised in that PA 6 and/or PA 6.6 and/or their copolycondensates PA 6/6.6 are used as partially crystalline polyamide.

3. Impact resistant polyamide moulding compounds according to claims 1 and 2 characterised in that ethylene and/or propylene homopolymers or ethylene and/or propylene copolymers are used as olefinic backbone polymer.

4. Impact resistant polyamide moulding compounds according to claims 1 to 3 characterised in that the polyolefin component contained in the compounds consists of a carboxylated (co-)graft product formed through grafting of α-β-ethylenically unsaturated monocarboxylic or dicarboxylic acids or their anhydrides including their mixtures among each other as well as their mixtures with carboxyl-group-free comonomers, onto ethylene/vinyl acetate copolymers with parts by weight of the vinyl acetate units between 5 and 25 % and a melt flow index MFI (190 °C, 2.16 kg) between 0.1 and 20 g/10 min. The gel content of the carboxylated (co-)graft product is beween 20 and 90 % for carboxyl group parts by weight between 0.3 and 8.0 %.

5. Impact resistant polyamide moulding compounds according to claims 1 to 4 characterised in that the gel content of the carboxylated components is between 10 and 80 % for carboxyl-group parts by weight between 0.5 and 6.0 %.

6. Impact resistant polyamide moulding compounds according to the claims 1 to 5 characterised in that the gel content of the carboxylated components is between 35 and 75 % for carboxyl group parts by weight between 1.0 and 3.0 %.

## Revendications

1. Matières à mouler de polyamide résistantes au choc à la base de compositions de
- 30 à 97 parts en poids de polyamide partiellement cristallin, avec une viscosité relative (mesurée avec une solution d'un pourcentage de 1 en masse dans du m-crésol par 25 °C) située entre 1,5 et 5 et
- 3 à 70 parts en poids de polyoléfine, constituée de 0 à 90 % en poids d'homopolymères et de copolymères d'oléfine non fonctionalisés ainsi que de 10 à 100 % en poids d'une polyoléfine carboxylée ou d'un mélange de polyoléfines carboxylées obtenu par greffage d'acides monocarboxyliquex et/ou dicarboxyliques éthyléniques α et β non saturés ou de leurs anhydrides sur un polymère de support oléfinique ou sur un mélange de polyoléfine, caractérisées par le fait que la teneur en poids de gel des constituantes carboxylées issu d'un greffage en phase solide en tant que résidu proportionnel de solution correspondant à un traitement de 12 heures sous recyclage d'un produit carboxylé de greffage dans 100 ml de xylène s'élève entre 5 et 95 % pour des parts en poids de groupes carboxyle situés entre 0,2 et 10 %.

2. Matières à mouler de polyamide résistantes au choc selon la spécification 1, caractérisées par le fait que sont utilisés PA 6 et/ou PA 6.6 et/ou leurs copolycondensats PA 6/6.6 comme polyamides partiellement cristallins.

3. Matières à mouler de polyamide résistantes au choc selon les spécifications 1 et 2, caractérisées par le fait que sont utilisés comme polymères de support oléfiniques des homopolymères ou copolymères d'éthylène et/ou de propylène.

4. Matières à mouler de polyamide résistantes au choc selon les spécifications de 1 à 3, caractérisées par le fait que dans les mélanges la part de polyéfine est constituée d'un (co-) produit de greffage carboxylé d'une teneur en poids de gel située entre 20 et 90 % pour des parts en masse de groupes carboxyle de 0,3 à 8,0 % obtenu par greffage d'acides monocarboxyliques et/ou dicarboxyliques éthyléniques α et β non saturés ou de leurs anhydrides sur un polymère de support oléfinique y compris de leurs mélanges entre eux et de mélanges de comonomères exempts de groupes carboxyles, sur des copolymères d'éthylène et d'acétate de vinyle avec une part en poids en unités d'acétate de vinyle de 5 à 25 % et un indice de fusion MFI (190 °C, 2,16 kg) de 0,1 à 20 g/10 min.

5. Matières à mouler de polyamide résistantes au choc selon les spécifications de 1 à 4, caractérisées par le fait que la teneur en poids de gel des constituantes carboxylées se situe entre 10 et 80 % pour des parts en poids des groupes carboxyle de 0,5 à 6,0 %.

6. Matières à mouler de polyamide résistantes au choc selon les spécifications 1 à 5, caractérisées par le fait que la teneur en poids de gel des constituantes carboxylées se situe entre 35 et 75 % pour des parts en poids des groupes carboxyle de 1,0 à 3,0 %.
